# EUROPÄISCHE PATENTSCHRIFT

(11) **EP 0 772 971 B1**
(45) Veröffentlichungstag und Bekanntmachung des Hinweises auf die Patenterteilung: **27.03.2002**
(21) Anmeldenummer: 96117963.7
(22) Anmeldetag: 08.11.1996
(51) Int. Cl.: A01J 7/02

(54) **Verfahren und Mittel zum Reinigen von Melkanlagen**
Process and device for cleaning milking systems
Procédé et dispositif de nettoyage pour installations laitières

(30) Priorität: 08.11.1995 DE 19541646
(43) Veröffentlichungstag der Anmeldung: 14.05.1997
(73) Patentinhaber: Chemische Fabrik Dr. Weigert GmbH & Co. KG., 20539 Hamburg (DE); WESTFALIA SEPARATOR AG, 59302 Oelde (DE)
(72) Erfinder: Wagemann, Wolfgang, Dr. Dipl.-Chem., 22967 Tremsbüttel (DE); Vollmer, Martin, Dr. Chemiker, 23795 Bad Segeberg (DE); Kühnau, Birgit, 22047 Hamburg (DE); Bücker, Heinrich, 33449 Langenberg (DE)
(74) Vertreter: Glawe, Delfs, Moll & Partner

(56) Entgegenhaltungen:
- GB-A- 2 264 156
- US-A- 3 916 923
- US-A- 4 015 618
- US-A- 4 061 504

## Beschreibung

Die Erfindung betrifft ein Verfahren zum Reinigen von Melkanlagen.

Bei der aus offenkundiger Vorbenutzung bekannten und üblichen Reinigung von Melkanlagen wird diese zunächst mit Frischwasser durchgespült, das anschließend in die Kanalisation abgelassen wird. Im nächsten Schritt wird ein kombiniertes Reinigungs- und Desinfektionsmittel durch die Anlage gepumpt. Mittels eines Durchlauferhitzers (Leistungsaufnahme 20 kW und mehr) wird es auf die erforderliche Reinigungstemperatur erhitzt. Nach dem Reinigungsschritt wird es in die Kanalisation abgelassen. In der Regel ist die Reinigungskomponente dieses kombinierten Mittels alkalisch, dies führt jedoch in Verbindung mit dem Erdalkaligehalt des Wassers und dem Calciumgehalt der Milch zu unerwünschten Kalk- bzw. Milchsteinablagerungen. Deswegen muß, abhängig insbesondere von der Wasserhärte, regelmäßig ein saures Reinigungs- und Desinfektionsmittel verwendet werden. Als desinfizierende Komponente in einem üblichen alkalischen kombinierten Reinigungs- und Desinfektionsmittel werden aktivchlorhaltige Verbindungen verwendet, bspw. Hypochlorite. Diese können im Abwasser chlororganische Verbindungen bilden, die die Umwelt belasten. Nachteilig bei diesem Verfahren ist ferner der hohe Stromverbrauch des Durchlauferhitzers, der immer morgens und abends nach dem Melken auftritt, also zu Zeiten, zu denen sowieso eine starke Netzbelastung vorliegt. Die Stromversorgungsunternehmen verlangen von den Landwirten besonders hohe Preise für diese Leistungsspitzen.

Es ist bereits vorgeschlagen worden (GB-A 2 264 156), den Reinigungs- und Desinfektionsschritt zu trennen. Jedoch erfordert das aus dieser Druckschrift bekannte Verfahren zusätzlich zu dem Reinigungs- und Desinfektionsschritt noch einen zwischengeschobenen Säurespülschritt, der getrennt von dem Desinfektionsschritt ausgeführt werden muß.

Gegenüber diesem Stand der Technik liegt der Erfindung die Aufgabe zugrunde, ein einfacheres Verfahren zum Reinigen von Melkanlagen zu schaffen, das eine verbesserte Reinigungswirkung bei geringerem Einsatz von Reinigungsmittel ermöglicht.

Die Erfindung löst diese Aufgabe, durch ein Verfahren zum Reinigen von Melkanlagen mit den folgenden Schritten:
a) Vorspülen mit Retourwasser, das wiederaufgefangene saure Desinfektionslösung enthält,
b) Reinigen mit einer alkalischen Reinigerlösung,
c) Desinfizieren mit einer sauren Desinfektionslösung,
d) Auffangen der gebrauchten Desinfektionslösung in einem Retourwasserbehälter.

Der Erfindung liegt die Erkenntnis zugrunde, daß sich das Reinigungsergebnis verbessern und gleichzeitig die erforderliche Menge an alkalischer Reinigerlösung vermindern läßt, wenn das Vorspülen der Melkanlage nicht mit Frischwasser, sondern mit Retourwasser, das wiederaufgefangene saure Desinfektionslösung enthält, durchgeführt wird. Der Säurerestgehalt des Retourwassers verbessert überraschenderweise das Ausspülen der Milchreste und löst oder lockert in der Melkanlage verbliebene anorganische Rückstände wie bspw. Milchstein. Im anschließenden alkalischen Reinigungsschritt muß daher nur eine vergleichsweise geringe Menge alkalischen Reinigers zum Erzielen eines guten Reinigungsergebnisses eingesetzt werden. Dies ist insofern überraschend, als das der Fachmann eigentlich erwartet hätte, daß nach dem Vorspülen in der Melkanlage verbliebene Reste des sauren Vorspülwassers den alkalischen Reiniger teilweise neutralisieren und damit in seine Reinigungswirkung beeinträchtigen wird. Es hat sich aber herausgestellt, daß eine solche möglicherweise vorhandene Beeinträchtigung überkompensiert wird durch die wesentlich verbesserte Vorspülwirkung des erfindungsgemäß verwendeten Retourwassers mit wiederaufgefangener saurer Desinfektionslösung.

Im Rahmen der Erfindung ist der Begriff "Melkanlage" weit zu verstehen und umfaßt sämtliche Anlagen und Einrichtungen, die beim Milcherzeuger Verwendung finden und mit Milch in Berührung kommen. Bspw. können unter diesem Begriff außer der eigentlichen Melkanlage mit den Melkzeugen ggf. separate Milchkühlanlagen fallen.

Vorteilhaft ist es, wenn die alkalische Reinigerlösung nach dem Reinigen zur mehrfachen Wiederverwendung in einem Sammelbehälter aufgefangen wird. Aufgrund des erfindungsgemäß erzielten guten Vorspülergebnisses wird die alkalische Reinigerlösung nur verhältnismäßig gering mit Schmutz und Milchrückständen belastet, so daß eine häufige Wiederverwendung (10 bis 20 mal oder mehr) möglich ist. Zweckmäßig ist es, wenn die wiederaufgefangene Reinigerlösung vor der erneuten Verwendung durch Zusatz von Reinigerkonzentrat aufgeschärft wird. Der während eines Reinigungsschritts aufgetretene Alkali- und Reinigungsmittelverlust wird durch dieses Aufschärfen ausgeglichen. Sofern sich bei der mehrfachen Verwendung der Reinigerlösung außer Konzentrationsverlusten auch Mengenverluste ergeben, können diese durch Zusatz von Wasser ausgeglichen werden.

Durch die erneute Verwendung der gebrauchten Desinfektionslösung zum Vorspülen und durch das mehrfache Wiederverwenden der alkalischen Reinigerlösung läßt sich gegenüber dem in der Praxis gebräuchlichen Stand der Technik (kombinierte Reinigung und Desinfektion mit aktivchlorhaltigen Mitteln) der Trinkwasserverbrauch um 40 bis 50 % und der Reiniger- bzw. Desinfektionsmittelverbrauch um 10 bis 40 % vermindern. Chlorhaltige Bestandteile zum Desinfizieren sind nicht erforderlich.

Vorteilhafterweise weist der Sammelbehälter für die wiederzuverwendende Reinigerlösung eine Heizeinrichtung auf und ist zweckmäßigerweise wärmeisoliert. Die Reinigerlösung kann in dem Sammelbehälter durch eine Heizeinrichtung niedriger Leistung auf die erforderliche Anfangstemperatur vorgewärmt werden. Dies kann zu lastschwachen Zeiten mit entsprechend günstigen Stromtarifen geschehen. Der vergleichsweise teure Betrieb eines Durchlauferhitzers in den Spitzenlastzeiten wird so vermieden. Die Anfangstemperatur wird so hoch gewählt, daß die Mindestreinigungstemperatur am Ende des Reinigungsvorgangs nicht unterschritten wird. Ein Teil der Wärmeenergie der Reinigungslösung dient somit zum Vorwärmen der Melkanlage auf die Reinigungstemperatur.

Zweckmäßigerweise wird die alkalische Reinigerlösung während des Reinigungsschrittes im Kreislauf mehrfach durch die Melkanlage umgewälzt bzw. geführt. Dieses mehrfache Umpumpen bewirkt einen intensiven Kontakt der zu reinigenden Flächen mit der Reinigerlösung und verbessert das Ablösen und Abtragen von Schmutz und sonstigen Rückständen durch intensivere mechanische Einwirkung der Reinigerlösung. Der Reinigungsschritt dauert zweckmäßigerweise mindestens 5, vorzugsweise 5 bis 10 min.

Das Volumen der zum Desinfizieren verwendeten Desinfektionslösung wird zweckmäßigerweise so gewählt, daß es mindestens dem Benetzungsvolumen der Melkanlage entspricht. Das Benetzungsvolumen ist das erforderliche Mindestvolumen, mit dem bereits bei einmaligem Durchspülen der Melkanlage eine Benetzung sämtlicher Oberflächen, die mit Milch in Berührung kommen können, erfolgt. Die Desinfektionslösung kann im Kreislauf mehrfach durch die Melkanlage umgewälzt werden. Dies wird insbesondere dann erforderlich sein, wenn man im Einzelfall mit einem unter dem Benetzungsvolumen liegenden Volumen der Desinfektionslösung arbeitet. Das Umwälzen erfolgt vorteilhafterweise für einen Zeitraum von mindestens 1 min, vorzugsweise mindestens 3 min, weiter vorzugsweise 3 bis 5 min.

Eine andere Möglichkeit der Desinfektion besteht darin, daß die Desinfektionslösung als Flüssigkeitspfropf in die Melkanlage geschoben wird, dort verweilt und nach Ablauf der Verweilzeit aus der Melkanlage in den Retourwasserbehälter ausgeschoben wird. Die Verweilzeit beträgt zweckmäßigerweise mindestens 1 min, vorzugsweise mindestens 3 min, weiter vorzugsweise 3 bis 5 min.

Bei einer vorteilhaften Ausführungsform der Erfindung wird zwischen dem Reinigen und dem Desinfizieren ein Zwischenspülen der Melkanlage mit Frischwasser durchgeführt. Dieses Zwischenspülen entfernt den größten Teil der Reinigerreste, so daß diese Reste die Wirksamkeit des sauren Desinfektionsmittels nicht beeinträchtigen können. Das gebrauchte Zwischenspülwasser wird zweckmäßigerweise in dem Retourwasserbehälter aufgefangen, der auch die gebrauchte saure Desinfektionslösung aufnimmt. Auch das Zwischenspülwasser wird somit für das Vorspülen wiederverwendet.

Nach dem Desinfizieren der Melkanlage erfolgt zweckmäßigerweise ein Nachspülen mit Frischwasser. Dieses Nachspülen kann ggf. auch zweifach oder mehrfach erfolgen. Das gebrauchte Nachspülwasser wird zweckmäßigerweise ebenfalls in dem Retourwasserbehälter aufgefangen und vermischt mit der Desinfektionslösung und ggf. mit dem Zwischenspülwasser zum Vorspülen wiederverwendet.

Als saure Desinfektionslösung ist besonders gut eine Desinfektionslösung verwendbar, die Peressigsäure enthält. Peressigsäure ist ein auch in verhältnismäßig geringen Konzentrationen hochwirksames Desinfektionsmittel. Besonders bevorzugt enthält die Desinfektionslösung zusätzlich wenigstens eine Mineralsäure (bevorzugt Schwefelsäure). Überraschenderweise hat sich gezeigt, daß eine solche Mineralsäure einerseits die Peressigsäure stabilisiert, andererseits hat dieser Mineralsäuregehalt zusätzlich die Wirkung, daß sich der Säuregehalt des Retourwassers und damit auch dessen Wirksamkeit als Vorspülmittel erhöht. Durch den Mineralsäurezusatz wird auch sichergestellt, daß unabhängig von der Härte des zur Zubereitung der Reinigungs- und Desinfektionslösung sowie zum Zwischen- und Nachspülen verwendeten Frischwassers Kalk- und Milchsteinablagerungen in der Melkanlage sicher vermieden werden.

Die alkalische Reinigerlösung wird bevorzugt aus einem Reinigerkonzentrat zubereitet, das die folgende Bestandteile enthält:
a) 5 bis 25 %, vorzugsweise 7 bis 15 % Gesamtalkalität, berechnet als NaOH
b) 1,5 bis 7 %, vorzugsweise 2 bis 5 % anorganische Phosphate, berechnet als P₂O₅
c) 1 bis 25 %, vorzugsweise 5 bis 20 % wenigstens eines sonstigen Komplexbildners für Calciumionen.

Diese Aufzählung der Bestandteile des Reinigerkonzentrats ist nicht abschließend, die Differenz zu 100 % ist Wasser.

Sämtliche Prozentangaben in dieser Beschreibung sind, soweit nichts anderes gesagt ist, Gewichtsprozente.

Die Gesamtalkalität wird in jedem Fall als NaOH berechnet. Wenn bspw. die Alkalität als Kaliumhydroxid zugesetzt wird, muß dessen Gewichtsanteil anhand der Molekulargewichtsverhältnisse von NaOH und KOH in Gewichtsanteile NaOH umgerechnet werden. Gleiches gilt für die anorganischen Phosphate, die in jedem Fall als P₂O₅ berechnet werden. Die sonstigen Komplexbildner für Calciumionen sind insbesondere Chelatbildner. Beispiele hierzu werden unten näher erläutert.

In der Regel wird etwa 1 Gew.-% eines solchen Reinigerkonzentrats mit Frischwasser zu einer alkalischen Reinigerlösung zubereitet.

Die Gesamtalkalität des Reinigerkonzentrats ist vergleichbar mit der Alkalität der aktivchlorhaltigen kombinierten Reinigungs- und Desinfektionsmittel des Standes der Technik. Im Stand der Technik war man bisher davon ausgegangen, daß solche Reinigerkonzentrate mit verhältnismäßig geringer Gesamtalkalität nur dann eine ausreichende Reinigungswirkung entfalten, wenn die unterstützende Reinigungswirkung von aktivchlorhaltigen Verbindungen hinzutritt. Man war der Auffassung, daß nur diese Kombination die zuverlässige Entfernung von Fett und Eiweiß sicherstellen kann.

Bei chlorfreien Reinigungskonzentraten hielt der Stand der Technik eine deutlich höhere Gesamtalkalität (30 bis 50 % NaOH) für erforderlich, um die vollständige Entfernung von Fett- und Eiweißrückständen sicherzustellen. Solche hochalkalischen Reinigerkonzentrate werden im Rahmen von CIP-Verfahren (cleaning in place) zur Reinigung von Industrieanlagen verwendet. Sie sind zur Reinigung von Melkanlagen schlecht geeignet, da sie aufgrund ihrer starken Alkalität nur schwer ausspülbar sind und somit große Mengen an Spülwasser erfordern würden.

Die Erfindung hat erkannt, daß überraschenderweise durch die Kombination einer vergleichsweise geringeren Gesamtalkalität mit den angegebenen Gehalten von anorganischen Phosphaten und Chelatbildnern sich eine ausreichende Reinigungswirkung im Rahmen des erfindungsgemäßen Verfahrens auch in Abwesenheit aktivchlorhaltiger Verbindungen erzielen läßt. Eine Ursache dafür dürfte darin liegen, daß die Kombination der Phosphate und der Chelatbildner zu einer besonders hohen Wasserhärtetoleranz des Reinigerkonzentrats führt und sicherstellt, daß die den Reinigungsprozeß störenden Erdalkaliionen (insbesondere Calciumionen) auch bei Verwendung von relativ hartem Frischwasser zu großen Teilen oder vollständig komplexiert werden. Das gleiche gilt für den in etwaigen Milchrückständen enthaltenen Calciumanteil.

Es sei angemerkt, daß anorganische Phosphate in hochalkalischen Formulierungen unbeständig sind und daher in die aus dem Stand der Technik bekannten hochalkalischen CIPReinigungskonzentrate nicht oder allenfalls in ganz geringem Umfang eingearbeitet werden können. Das gleiche gilt für verschiedene Chelatbildner wie bspw. EDTA (Ethylendiamintetraessigsäure) und NTA (Nitrilotriessigsäure). In die bekannten niedrigalkalischen aktivchlorhaltigen Reinigungsmittel können zwar anorganische Phosphate eingearbeitet werden, nicht jedoch die Chelatbildner, da diese mit aktivchlorhaltigen Verbindungen nicht verträglich sind.

Als Alkalikomponente wird bevorzugt Kaliumhydroxid eingesetzt. Es hat sich gezeigt, daß kaliumsalzhaltige Reiniger im Vergleich zu natriumsalzhaltigen Reinigern eine verbesserte Reinigungswirkung aufweisen und leichter ausspülbar sind. Eine plausible Erklärung für diesen empirischen Befund liegt noch nicht vor. Aus dem gleichen Grund werden die anorganischen Phosphate bevorzugt als Kaliumsalze eingesetzt. Verwendbare Phosphate sind bspw. Pentakaliumtriphosphat, Trikaliumphosphat, Kaliumhexametaphosphat. Andere übliche, aus Reinigungsmittelformulierungen bekannte Phosphate können ebenfalls verwendet werden. Die Verwendung von entsprechenden Natriumphosphaten ist ebenfalls möglich. Besonders bevorzugt ist im Rahmen der Erfindung Pentakaliumtriphosphat.

Chelatbildner im Sinne der Erfindung sind sämtliche Stoffe, die mit Metallen (insbesondere Calcium) chelatförmige Koordinationsverbindungen eingehen können. Bevorzugt ist die Verwendung wenigstens vierzähniger Liganden, weiter bevorzugt sind sechszähnige Liganden als Chelatbildner. Gut geeignete Chelatbildner sind:
NTA; EDTA; Glukonsäure; Phosphonsäuren; N-(2-Hydroxyethyliminodiessigsäure; 1,2,3,4-Cyclopentantetracarbonsäure; Zitronensäure, O-Carboxymethyltartronsäure; O-Carboxymethyloxybernsteinsäure; Salze der vorgenannten Stoffe.

Sofern Salze von Chelatbildner verwendet werden, ist auch hier die Verwendung der Kaliumsalze bevorzugt.

Die Reinigerkonzentrate weisen eine hohe Reinigungseffizienz auf, so daß für den Reinigungsschritt einer Melkanlage in der Regel weniger als 10 min erforderlich sind. Die durch den Phosphat- und Chelatbildnergehalt bewirkte hohe Wasserhärtetoleranz stellt sicher, daß die Konzentrate unabhängig von den regional sehr unterschiedlichen Wasserhärteparametern stets die gleiche Reinigungsleistung vollbringen. Das hohe Schmutztragevermögen der aus diesen Konzentraten zubereiteten Reinigerlösung ermöglicht eine mehrfache (in der Regel mindestens 10 bis 20fache) Wiederverwendung der Reinigerlösung bei dem erfindungsgemäßen Stapelverfahren. Nach jeder Verwendung ist ggf. eine Aufschärfung der Lösung mit Reinigerkonzentrat und/oder eine Volumenergänzung mit Frischwasser erforderlich. Ferner sind aus dem Reinigerkonzentrat zubereitete Reinigerzubereitete Reinigerlösungen mit verhältnismäßig geringen Wasser- bzw. Desinfektionslösungsmengen im wesentlichen rückstandsfrei aus einer gereinigten Melkanlage ausspülbar.

Das Reinigerkonzentrat kann als Chelatbildner enthalten:
- 1 bis 25 %, vorzugsweise 8 bis 20 % NTA oder deren Salze,
- 0 bis 10 %, vorzugsweise 2 bis 5 % Glukonsäure oder deren Salze.

Grundsätzlich könnte in dieser Chelatbildnerkombination NTA durch EDTA ersetzt werden, jedoch ist EDTA aus Umweltgründen weniger erwünscht, da dieser Stoff nur schlecht biologisch abbaubar ist.

Diese Kombination von NTA und Glukonsäure als Chelatbildner bewirkt eine besonders hohe Reinigungseffizienz im Hinblick insbesondere auf anorganische Verunreinigungen wie Kalkablagerungen oder Milchstein.

Eine nochmalige Verbesserung der Wasserhärtetoleranz und des Reinigungseffekts gegenüber den genannten mineralischen Rückständen läßt sich durch Zusatz von 0,1 bis 5 %, vorzugsweise 0,2 bis 2 % wenigstens einer Phosphonsäure oder deren Salze erzielen. Die genannten Stoffe verhindern wirkungsvoll die Kristallisationskeimbildung von wasserunlöslichen Erdalkalisalzen.

Unter den Phosphonsäuresalzen sind wiederum die Kaliumsalze bevorzugt. Verwendbare Phosphonsäuren sind bspw. Phosphonobutantricarbonsäure; Aminotrismethylenphosphonsäure, deren Homologe auf der Basis Ethylendiamin, Diethylentriamin bzw. Hexamethylendiamin; Hydroxyethandiphosphonsäure. Bevorzugt ist die Verwendung von Phosphonobutantricarbonsäure bzw. deren Kaliumsalz.

Bevorzugt enthält das Reinigerkonzentrat 0,05 bis 5 %, vorzugsweise 0,1 bis 1 % wenigstens eines Tensids. Tenside im Sinne der Erfindung sind jegliche Stoffe, die die Grenzflächenspannung einer wäßrigen Lösung herabsetzen können. Es sind anionische, kationische, nichtionische und amphotere Tenside verwendbar. Verwendbare Tenside sind in Römpps Chemielexikon, 9. Aufl., Band 6, Seite 4495 ff. unter dem Stichwort "Tenside" sowie in Ullmanns Encyclopaedia of Industrial Chemistry, 5. Aufl., Band 8, Seite 315 ff. unter dem Stichwort "Detergents" aufgeführt. Bevorzugt sind nichtionische oder amphotere Tenside verwendbar, bspw. Tenside aus der Klasse der Fettalkyloxalkylate. Besonders bevorzugt als Tensid ist das Dinatriumsalz oder Dikaliumsalz der Capryl-iminodipropionsäure. Der Tensidzusatz setzt die Oberflächenspannung der Reinigungslösung herab und verbessert und beschleunigt die Reinigungswirkung durch schnellere Unterwanderung und Ablösung von Schmutzablagerungen sowie durch Emulgierung derselben in der Lösung.

Ein im Rahmen der Erfindung verwendbares Desinfektionskonzentrat weist folgende Bestandteile auf:
- 1 bis 5 %, vorzugsweise 2 bis 4 % Peressigsäure,
- 10 bis 40 %, vorzugsweise 16 bis 35 % Mineralsäure,
- 15 bis 30%, vorzugsweise 17 bis 20 % Wasserstoffperoxid.

Die Aufzählung der Bestandteile ist nicht vollständig, die Differenz zu 100 % ist Wasser. Ein solches Desinfektionskonzentrat wird üblicherweise in Form einer 0,3 %igen wäßrigen Lösung zu einer Desinfektionslösung zubereitet.

Als desinfizierende Bestandteile sind Peressigsäure sowie Wasserstoffperoxid enthalten. Der verhältnismäßige hohe Mineralsäuregehalt bewirkt einerseits eine wirksame Entfernung von nach der Reinigung ggf. noch vorhandenen Kalk- oder Milchsteinresten und hat andererseits die überraschende Wirkung, daß die an und für sich verhältnismäßig instabile Peressigsäure in der Formulierung stabilisiert und somit die Haltbarkeit des Desinfektionskonzentrats erhöht wird. Der Peressigsäuregehalt soll nicht zu hoch sein, um Gefährdungen und Belästigungen des Bedienungspersonals im Milcherzeugerbetrieb zu vermeiden, er muß andererseits natürlich ausreichend sein, um die notwendige Desinfektionswirkung sicherzustellen. Der o. g. Peressigsäuregehalt stellt hier einen guten Kompromiß dar.

Als Mineralsäure wird besonders bevorzugt Schwefelsäure verwendet. Zusätzlich kann das Desinfektionskonzentrat 1 bis 7 %, vorzugsweise 2 bis 5 % Essigsäure enthalten. Möglich ist auch der Zusatz von Halogenessigsäuren anstelle der oder zusätzlich zur Essigsäure.

Ggf. kann dem Desinfektionskonzentrat ein Stabilisator, bevorzugt in einem Anteil von 0,9 bis 1,1 % zugefügt werden. Verwendbare Stabilisatoren sind beispielsweise Phosphonsäuren, bevorzugt Hydroxyethandiphosphonsäure.

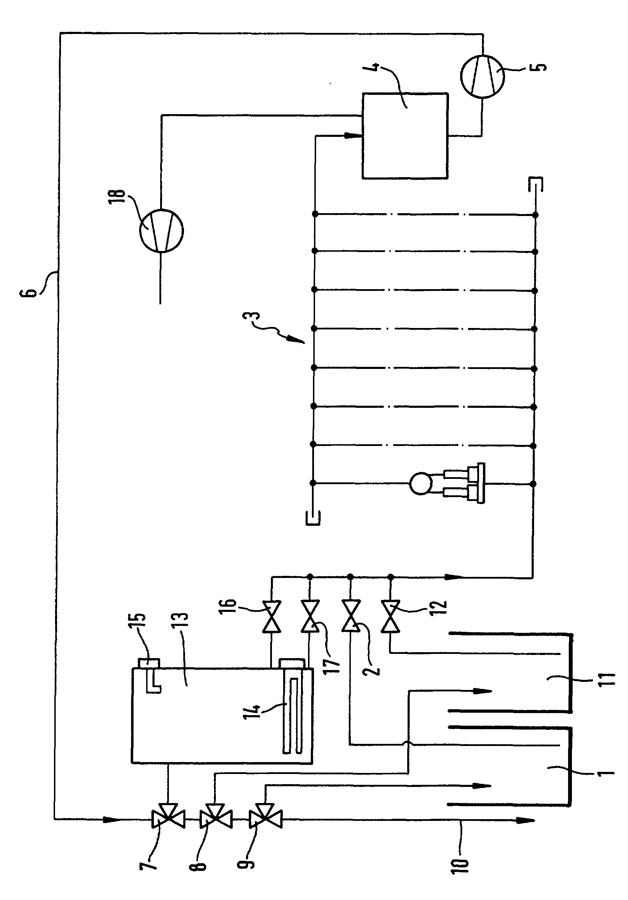

Ein Ausführungsbeispiel der Erfindung wird im folgenden anhand der Zeichnung beschrieben, die schematisch eine Anlage zur Durchführung des erfindungsgemäßen Verfahrens zeigt.

### Zubereitung eines Reinigerkonzentrats

Ein Reinigerkonzentrat wird gemäß der folgenden Rezeptur angesetzt:
22,5 % KOH (entspricht 16,1 % Gesamtalkaligehalt als NaOH errechnet)
10 % Pentakaliumtriphosphat K₅P₃O₁₁ (entspricht 4,76 % P₂O₅)
2 % Nitrilotriessigsäure
3,5 % Glukonsäure
1 % Phosphonobutantricarbonsäure
1 % Capryliminodipropionsäure-Natriumsalz
Rest auf 100 % Wasser

### Zubereitung des Desinfektionskonzentrats

Ein Konzentrat der folgenden Zusammensetzung wird hergestellt:
3 % Peressigsäure
18 % Schwefelsäure
22 % Wasserstoffperoxid
4 % Essigsäure
1 % Hydroxyethandiphosphonsäure
Rest auf 100 % Wasser

Bei der Herstellung wird zunächst eine konzentrierte Peressigsäurelösung (Konzentration ca. 12 bis 46 %) mit Wasser verdünnt. Die eingesetzte Menge von Peressigsäure wird so gewählt, daß sich bezogen auf das angestrebte Endgewicht des herzustellenden Desinfektionskonzentrates eine Peressigsäurekonzentration von 7 % ergibt. Durch das Verdünnen mit Wasser hydrolysiert die Peressigsäure teilweise zu Essigsäure und Wasserstoffperoxid. Sobald sich im Rahmen dieser Hydrolyse das gewünschte Verhältnis Essigsäure-Peressigsäure eingestellt hat, wird diese Hydrolyse durch Zugabe der Wasserstoffperoxidlösung gestoppt. Die Wasserstoffperoxidmenge ist so bemessen, daß sich nach der Zugabe ein Gleichgewicht der Hydrolyse einstellt und sich das Konzentrationsverhältnis Essigsäure zu Peressigsäure nicht mehr ändert. Bezüglich der Einzelheiten dieses Herstellverfahrens wird auf die EP-B-515 486 verwiesen, die durch Bezugnahme darauf in die vorliegende Offenbarung einbezogen wird.

Das Reinigen einer Melkanlage wird nun anhand der Schemazeichnung erläutert. Die Bezugsziffer 3 bezeichnet eine Melkanlage mit den Melkzeugen und sonstigen Einrichtungen. In einem Retourwasserbehälter 1 befinden sich die von der vorhergehenden Reinigung gestapelten Zwischen-, Desinfektions- und Nachspüllösungen. Dieses Retourwasser wird mittels der Vakuumpumpe 18 durch das Ventil 2 in die Melkanlage 3 gesaugt. Darin noch vorhandene flüssige Milchreste werden durch das Retourwasser ausgespült. Der Säuregehalt des Retourwassers löst insbesondere vorhandene anorganische Ablagerungen (Kalk- und Milchstein) an bzw. entfernt diese. Die gebrauchte Vorspüllösung wird im Abscheider 4 gesammelt. Anschließend wird die Vorspüllösung mittels der Pumpe 5 durch die Druckleitung 6 und die Ventile 7, 8, 9 in die Abflußleitung 10 und damit in die Kanalisation gefördert.

In dem Sammelbehälter 11 befindet sich Reinigerlösung (1%ige wäßrige Lösung des Reinigerkonzentrats). Der Sammelbehälter 11 kann eine in der Zeichnung nicht dargestellte Wärmeisolierung und Heizeinrichtung aufweisen, um die Reinigerlösung auf die erforderliche Anfangstemperatur vorzuwärmen und bei dieser Temperatur zu halten. Zu Beginn der alkalischen Reinigungsphase wird der Reiniger mittels der Vakuumpumpe 18 durch das Ventil 12 aus dem Sammelbehälter 11 und durch die Melkanlage 3 gesaugt. Die Reinigerlösung wird im Abscheider 4 gesammelt und mittels der Pumpe 5 durch die Druckleitung 6 und das Ventil 7 in den Behälter 13 gefördert. In diesem Behälter 13 kann zusätzlich oder anstelle der Heizung des Sammelbehälters 11 ein Durchlauferhitzer bzw. eine Heizvorrichtung 14 angeordnet sein, um die Reinigerlösung auf gewünschte Temperatur zu bringen. Über eine Dosiereinrichtung 15 kann Reinigerkonzentrat zum Aufschärfen der möglicherweise bereits mehrfach verwendeten Reinigerlösung hinzugefügt werden. Auch Frischwasser zur Volumenergänzung der Reinigerlösung kann über diese Dosiereinrichtung 15 hinzugefügt werden.

Über das Ventil 16 wird die Reinigerlösung wieder in die Melkanlage 3 geführt und zirkuliert so mehrfach durch die Melkanlage 3, bis die gewünschte Reinigungswirkung (in der Regel nach etwa 5 bis 10 min) erzielt ist. Die Temperatur der Reinigerlösung liegt üblicherweise in der Größenordnung von etwa 50 bis 80 °C. Der mit dem Ventil 16 verbundene Auslaß des Behälters 13 befindet sich oberhalb des Durchlauferhitzers bzw. Heizelements 14, so daß dieses Heizelement während der Zirkulation der Reinigerlösung nicht trockenfallen kann.

Zum Abschluß des Reinigens wird die Reinigerlösung durch die Ventile 7 und 8 wieder in den Sammelbehälter 11 zurückgeführt. Der Behälter 13 wird über das Ventil 17 restentleert.

Anschließend wird in dem Behälter 13 eine mindestens dem Volumen der Druckleitung 6 entsprechende Frischwassermenge vorgestaut, die über die Dosiereinrichtung 15 zugeführt wird. Dieses Frischwasser wird durch das Ventil 17 und mittels der Vakuumpumpe 18 durch die Melkanlage 3 in den Abscheidebehälter 4 gesaugt. Anschließend wird es mittels der Pumpe 5 in die Druckleitung 6 gefördert. Dabei wird in der Druckleitung 6 noch verbliebende Reinigerlösung durch die Ventile 7 und 8 in den Sammelbehälter 11 zurückgeführt. Sobald sämtliche in der Druckleitung 6 noch verbliebende Reinigerlösung von dem Zwischenspülwasser herausgedrückt worden ist, schalten die Dreiwegventile 8 und 9 um, so daß das jetzt ggf. noch folgende Zwischenspülwasser in den Retourwasserbehälter 1 gefördert wird. Alternativ kann man das Volumen des Zwischenspülwassers auch so bemessen, daß es gerade eben dem Volumen der Druckleitung 6 entspricht. In diesem Fall wird beim Zwischenspülen kein Zwischenspülwasser in den Retourwasserbehälter 1 gefördert, statt dessen verbleibt das gesamte Zwischenspülwasser in der Druckleitung 6.

Für das anschließende Desinfizieren wird in dem Behälter 13 eine Frischwassermenge vorgestaut, die wenigstens dem Benetzungsvolumen der Melkanlage 3 entspricht. Bevorzugt wird die Frischwassermenge so gewählt, daß sie sowohl mindestens das Benetzungsvolumen der Melkanlage 3 als auch mindestens das Volumen der Druckleitung 6 erreicht. Mittels der Dosiereinrichtung 15 wird Desinfektionskonzentrat in einer solchen Menge zugegeben, daß eine 0,3 %ige wäßrige Lösung dieses Konzentrats entsteht. Die Desinfektionslösung wird anschließende durch das Ventil 17 in die Melkanlage 3 gesaugt. Unmittelbar nach Entleeren des Behälters 13 wird das Ventil 17 geschlossen, so daß keine Luft aus dem Behälter 13 nachströmen kann und die Desinfektionslösung als Flüssigkeitspfropf in der Melkanlage 3 verbleibt. Alternativ könnte die Desinfektionslösung auch mittels der Pumpe 5 über die Druckleitung 6, das Ventil 7, den Behälter 13 und das Ventil 17 mehrfach im Kreis durch die Melkanlage 3 gepumpt werden. Dies ist jedoch weniger bevorzugt, da dabei die Desinfektionslösung durch möglicherweise noch in der Druckleitung 6 vorhandende Mengen von Zwischenspülwasser verdünnt würde.

Nach Abschluß des Desinfizierens wird das Ventil 17 zur Belüftung der Melkanlage 3 wieder geöffnet und die Desinfektionslösung im Abscheider 4 gesammelt.

Anschließend wird die Desinfektionslösung mittels der Pumpe 5 in die Druckleitung 6 gefördert, das darin ggf. noch befindliche Volumen von Zwischenspülwasser wird dann über die Ventile 7, 8 und 9 in den Retourwasserbehälter 1 ausgespült.

Zum Nachspülen wird im Behälter 13 eine entsprechende Frischwassermenge vorgestaut und durch das Ventil 17 in die Melkanlage 3 gesaugt. Das Nachspülwasser wird im Abscheider 4 gesammelt und mittels der Pumpe 5 durch die Druckleitung 6 abgepumpt. Das in der Druckleitung 6 noch befindliche Desinfektionsmittel wird dabei durch die Ventile 7, 8 und 9 in den Retourwasserbehälter 1 gefördert. Dieser Nachspülschritt kann ggf. auch ein zweites Mal wiederholt werden.

Die Steuerung der Reinigungsanlage, insbesondere auch der elektrisch betätigbaren Ventile 2, 7, 8, 9, 12, 16, 17 ist dem Fachmann geläufig und bedarf keiner näheren Erläuterung. Im Bereich der Ventile 7, 8, 9 können beispielsweise Leitfähigkeitsmeßsonden angeordnet sein, die anhand der unterschiedlichen Leitfähigkeiten feststellen, ob durch die Druckleitung 6 Reinigerlösung, Desinfektionslösung oder Zwischen- bzw. Nachspülwasser gefördert wird und dementsprechend anhand dieser Leitfähigkeit diese Ventile so schalten, daß der ankommende Flüssigkeitsstrom in den Abfluß 10, den Retourwasserbehälter 1 oder den Sammelbehälter 11 geleitet wird. Besonders bevorzugt und wesentlich kostengünstiger ist jedoch eine sog. Mengensteuerung, bei der eine entsprechende Umschaltung der Ventile nach Durchfluß einer vorgegebenen Flüssigkeitsmenge erfolgt. Da die jeweils eingesetzten Mengen an Spülwasser, Reiniger und Desinfektionslösung bekannt sind, läßt sich mit dieser Mengensteuerung eine einfache und dennoch recht genaue Abförderung der jeweiligen Lösungen in die zugehörigen Behälter bzw. den Abfluß erreichen.

## Patentansprüche

1. Verfahren zum Reinigen von Melkanlagen, das folgende Schritte aufweist:
a) Vorspülen mit Retourwasser, das wiederaufgefangene saure Desinfektionslösung enthält,
b) Reinigen mit einer alkalischen Reinigerlösung,
c) Desinfizieren mit einer sauren Desinfektionslösung,
d) Auffangen der gebrauchten Desinfektionslösung in einem Retourwasserbehälter (1).

2. Verfahren nach Anspruch 1, **dadurch gekennzeichnet, daß** die alkalische Reinigungslösung nach dem Reinigen zur mehrfachen Wiederverwendung in einem Sammelbehälter (11) aufgefangen wird.

3. Verfahren nach Anspruch 2, **dadurch gekennzeichnet, daß** die wiederaufgefangene Reinigerlösung vor der erneuten Verwendung durch den Zusatz von Reinigerkonzentrat aufgeschärft wird.

4. Verfahren nach Anspruch 2 oder 3, **dadurch gekennzeichnet, daß** der Sammelbehälter (11) eine Heizeinrichtung aufweist.

5. Verfahren nach einem der Ansprüche 1 bis 4, **dadurch gekennzeichnet, daß** die Reinigerlösung im Kreislauf mehrfach durch die Melkanlage (3) umgewälzt wird.

6. Verfahren nach einem der Ansprüche 1 bis 5, **dadurch gekennzeichnet, daß** der Reinigungsschritt mindestens 5 min, vorzugsweise 5 bis 10 min dauert.

7. Verfahren nach einem der Ansprüche 1 bis 6, **dadurch gekennzeichnet, daß** das Volumen der zum Desinfizieren verwendeten Desinfektionslösung mindestens dem Benetzungsvolumen der Melkanlage entspricht.

8. Verfahren nach einem der Ansprüche 1 bis 7, **dadurch gekennzeichnet, daß** die Desinfektionslösung im Kreislauf mehrfach durch die Melkanlage (3) umgewälzt wird.

9. Verfahren nach Anspruch 8, **dadurch gekennzeichnet, daß** das Umwälzen über einen Zeitraum von mindestens 1 min, vorzugsweise mindestens 3 min, weiter vorzugsweise 3 bis 5 min erfolgt.

10. Verfahren nach einem der Ansprüche 1 bis 7, **dadurch gekennzeichnet, daß** die Desinfektionslösung als Flüssigkeitspfropf in die Melkanlage (3) geführt wird, dort verweilt, und nach Ablauf der Verweilzeit aus der Melkanlage (3) ausgeschoben oder abgesaugt wird.

11. Verfahren nach Anspruch 10, **dadurch gekennzeichnet, daß** die Verweilzeit mindestens 1 min, vorzugsweise mindestens 3 min, weiter vorzugsweise 3 bis 5 min beträgt.

12. Verfahren nach einem der Ansprüche 1 bis 11, **dadurch gekennzeichnet, daß** zwischen dem Reinigen und dem Desinfizieren ein Zwischenspülen der Melkanlage (3) mit Frischwasser durchgeführt wird.

13. Verfahren nach Anspruch 12, **dadurch gekennzeichnet, daß** das gebrauchte Zwischenspülwasser in dem Retourwasserbehälter (1) aufgefangen wird.

14. Verfahren nach einem der Ansprüche 1 bis 13, **dadurch gekennzeichnet, daß** nach dem Desinfizieren ein Nachspülen der Melkanlage (3) mit Frischwasser erfolgt.

15. Verfahren nach Anspruch 14, **dadurch gekennzeichnet, daß** das gebrauchte Nachspülwasser in dem Retourwasserbehälter (1) aufgefangen wird.

16. Verfahren nach einem der Ansprüche 1 bis 15, **dadurch gekennzeichnet, daß** die verwendete Desinfektionslösung Peressigsäure enthält.

17. Verfahren nach Anspruch 16, **dadurch gekennzeichnet, daß** die Desinfektionslösung zusätzlich wenigstens eine Mineralsäure enthält.

18. Verfahren nach einem der Ansprüche 1 bis 17, **dadurch gekennzeichnet, daß** die alkalische Reinigerlösung ein Reinigerkonzentrat mit den folgenden Bestandteilen enthält:
a) 5 bis 25 %, vorzugsweise 7 bis 15 % Gesamtalkalität, berechnet als NaOH,
b) 1,5 bis 7 %, vorzugsweise 2 bis 5 % anorganische Phosphate, berechnet als P₂O₅,
c) 1 bis 25 %, vorzugsweise 5 bis 20 % wenigstens eines sonstigen Komplexbildners für Calciumionen.

## Claims

1. Method of cleaning milking units, which has the following steps:
a) prerinsing with return water, which contains recollected acidic disinfection solution,
b) cleaning with an alkaline cleaner solution,
c) disinfecting with an acidic disinfection solution,
d) collecting the used disinfection solution in a return water tank (1).

2. Method according to Claim 1, **characterized in that** the alkaline cleaning solution is collected, after the cleaning, in a storage tank (11) for repeated reuse.

3. Method according to Claim 2, **characterized in that** the recollected cleaner solution is strengthened before reuse by the addition of cleaner concentrate.

4. Method according to Claim 2 or 3, **characterized in that** the storage tank (11) contains a heating device.

5. Method according to one of Claims 1 to 4, **characterized in that** the cleaner solution is repeatedly recirculated through the milking unit (3).

6. Method according to one of Claims 1 to 5, **characterized in that** the cleaning step lasts at least 5 min, preferably 5 to 10 min.

7. Method according to one of Claims 1 to 6, **characterized in that** the volume of the disinfection solution used for disinfection corresponds at least to the wetting volume of the milking unit.

8. Method according to one of Claims 1 to 7, **characterized in that** the disinfection solution is repeatedly recirculated through the milking unit (3).

9. Method according to Claim 8, **characterized in that** the recirculation takes place over a period of at least 1 min, preferably at least 3 min, further preferably 3 to 5 min.

10. Method according to one of Claims 1 to 7, **characterized in that** the disinfection solution is led into the milking unit (3) as a liquid plug, allowed to reside there, and, after expiry of the residence time, is pushed out of or aspirated from the milking unit (3).

11. Method according to Claim 10, **characterized in that** the residence time is at least 1 min, preferably at least 3 min, further preferably 3 to 5 min.

12. Method according to one of Claims 1 to 11, **characterized in that**, between the cleaning and the disinfection, an intermediate rinsing of the milking unit (3) with fresh water is carried out.

13. Method according to Claim 12, **characterized in that** the used intermediate rinsing water is collected in the return water tank (1).

14. Method according to one of Claims 1 to 13, **characterized in that**, after the disinfection, rerinsing of the milking unit (3) with fresh water takes place.

15. Method according to Claim 14, **characterized in that** the used rerinsing water is collected in the return water tank (1).

16. Method according to one of Claims 1 to 15, **characterized in that** the disinfection solution used contains peracetic acid.

17. Method according to Claim 16, **characterized in that** the disinfection solution additionally contains at least one mineral acid.

18. Method according to one of Claims 1 to 17, **characterized in that** the alkaline cleaner solution contains a cleaner concentrate having the following constituents:
a) 5 to 25%, preferably 7 to 15%, of total alkalinity, calculated as NaOH,
b) 1.5 to 7%, preferably 2 to 5%, of inorganic phosphates, calculated as P₂O₅,
c) 1 to 25%, preferably 5 to 20%, of at least one other complexing agent for calcium ions.

## Revendications

1. Procédé de nettoyage d'installations de traite, présentant les étapes suivantes :
a) rinçage préalable avec de l'eau de retour, qui contient une solution de désinfection acide récupérée,
b) nettoyage avec une solution alcaline de nettoyant,
c) désinfection avec une solution de désinfection acide,
d) récupération de la solution de désinfection usagée dans un réservoir d'eau de retour (1).

2. Procédé selon la revendication 1, **caractérisé en ce que** la solution alcaline de nettoyage est récupérée après le nettoyage dans un réservoir collecteur (11) en vue de multiples réutilisations.

3. Procédé selon la revendication 2, **caractérisé en ce que** la solution de nettoyage récupérée est réactivée par ajout d'un concentré de nettoyant avant le nouvel usage.

4. Procédé selon la revendication 2 ou 3, **caractérisé en ce que** le réservoir collecteur (11) présente un dispositif de chauffage.

5. Procédé selon l'une des revendications 1 à 4, **caractérisé en ce que** la solution de nettoyant est recyclée plusieurs fois à travers l'installation de traite (3).

6. Procédé selon l'une des revendications 1 à 5, **caractérisé en ce que** l'étape de nettoyage dure au moins 5 mn, de préférence 5 à 10 mn.

7. Procédé selon l'une des revendications 1 à 6, **caractérisé en ce que** le volume de la solution de désinfection utilisée pour désinfecter correspond au moins au volume de mouillage de l'installation de traite.

8. Procédé selon l'une des revendications 1 à 7, **caractérisé en ce que** la solution de désinfection est recyclée plusieurs fois dans le circuit à travers l'installation de traite (3).

9. Procédé selon la revendication 8, **caractérisé en ce que** le recyclage s'effectue sur une durée de 1 mn, de préférence 3 mn, et encore de préférence 3 à 5 mn.

10. Procédé selon l'une des revendications 1 à 7, **caractérisé en ce que** la solution de désinfection est amenée comme tampon de liquide dans l'installation de traite (3), y est retenue, puis après écoulement du temps de retenue, refoulée hors de l'installation de traite (3) ou aspirée.

11. Procédé selon la revendication 10, **caractérisé en ce que** le temps de retenue est d'au moins 1 mn, de préférence au moins 3 mn, et de préférence encore de 3 à 5 mn.

12. Procédé selon les revendications 1 à 11, **caractérisé en ce que**, entre le nettoyage et la désinfection, un rinçage intermédiaire de l'installation de traite (3) est effectué à l'eau claire.

13. Procédé selon la revendication 12, **caractérisé en ce que** l'eau de rinçage intermédiaire utilisée est récupérée dans le réservoir d'eau de retour (1).

14. Procédé selon l'une des revendications 1 à 13, **caractérisé en ce que**, après la désinfection, on effectue un rinçage postérieur de l'installation de traite (3) à l'eau claire.

15. Procédé selon la revendication 14, **caractérisé en ce que** l'eau de rinçage postérieur utilisée est récupérée dans le réservoir de retour (1).

16. Procédé selon l'une des revendications 1 à 15, **caractérisé en ce que** la solution de désinfection utilisée contient de l'acide peracétique.

17. Procédé selon la revendication 16, **caractérisé en ce que** la solution de désinfection comporte en outre au moins un acide minéral.

18. Procédé selon l'une des revendications 1 à 17, **caractérisé en ce que** la solution alcaline de nettoyant contient un concentrat de nettoyant comportant les composants suivants :
a) 5 à 25 %, de préférence 7 à 15 % de l'alcalinité totale calculée sous forme de NaOH,
b) 1,5 à 7%, de préférence 2 à 5 % de phosphates organiques, calculés sous forme de P₂O₅,
c) 1 à 25%, de préférence 5 à 20% d'au moins un agent complexant pour des ions calcium.
